# EUROPÄISCHE PATENTSCHRIFT

(11) **EP 3 653 057 B1**
(45) Veröffentlichungstag und Bekanntmachung des Hinweises auf die Patenterteilung: **24.11.2021**
(21) Anmeldenummer: 19203086.4
(22) Anmeldetag: 14.10.2019
(51) Int. Cl.: A21C 11/00, A21C 11/02

(54) **STANZVORRICHTUNG ZUR ERZEUGUNG MEHRERER REIHEN VON TEIGRINGEN**
PUNCHING DEVICE FOR GENERATING MULTIPLE ROWS OF DOUGH RINGS
DISPOSITIF DE POINÇONNAGE PERMETTANT DE PRODUIRE UNE PLURALITÉ DE RANGÉES D'ANNEAUX DE PÂTE

(30) Priorität: 14.11.2018 DE 102018219437
(43) Veröffentlichungstag der Anmeldung: 20.05.2020
(73) Patentinhaber: BackNet GmbH, 33649 Bielefeld (DE)
(72) Erfinder: Meier, Alexander, 91602 Dürrwangen (DE); Fiedler, Rudolf, 91731 Langfurth (DE)
(74) Vertreter: Rau, Schneck & Hübner Patentanwälte Rechtsanwälte PartGmbB

(56) Entgegenhaltungen:
- DE-A1-102013 104 716
- US-A1- 2012 207 899
- US-A1- 2012 263 815

## Beschreibung

Die vorliegende Patentanmeldung nimmt die Priorität der deutschen Patentanmeldung DE 10 2018 219 437.8 in Anspruch.

Die Erfindung betrifft eine Stanzvorrichtung zur Erzeugung einer oder mehrerer Reihen von schlusslosen Teigringen. Ferner richtet sich die Erfindung auf eine Teigbearbeitungsanlage mit einer derartigen Stanzvorrichtung.

Stanzvorrichtungen zur Erzeugung schlussloser Teigringe im industriellen Maßstab sind bekannt aus der EP 1 600 058 B1, und der EP 2 514 317 B1 und der US 2012/0263815 A1. Die US 2012/0207899 A1 offenbart ein Verfahren sowie eine Vorrichtung zum Schneiden von Teigprodukten mit Löchern aus einer Teigschicht. Die DE 10 2013 104 716 A1 offenbart ein Verfahren und eine Vorrichtung zur Formung von Teig.

Es ist eine Aufgabe der vorliegenden Erfindung, eine Stanzvorrichtung der eingangs genannten Art derart weiterzubilden, dass ein Stanzen von Teiglingen insbesondere zur Donut-Herstellung auch beispielsweise für das handwerkliche Backen zugänglich ist.

Diese Aufgabe ist erfindungsgemäß gelöst durch eine Stanzvorrichtung mit den im Anspruch 1 angegebenen Merkmalen.

Ein Teigling-Träger mit einer Teigling-Aufnahme, die dem Stanzstempel zugeordnet ist, oder mit einer Mehrzahl von den Stanzstempeln jeweils zugeordneten Teigling-Aufnahmen mit Durchtrittsöffnungen als Stanzmatrizen ermöglicht eine Teigring-Erzeugung mit hohem Durchsatz. Grundsätzlich können Komponenten einer Teigbearbeitungsanlage in Bezug auf die Beförderung der Teigling-Träger und auch in Bezug auf Tragkomponenten für die Stanzstempel genutzt werden, die beispielsweise bei Stüpfelstationen aus dem Stand der Technik bereits bekannt sind. Insbesondere kann die Stanzvorrichtung mit einer Mehrzahl von Teigling-Trägern taktweise zusammenarbeiten. Der Stanzkopf kann als Revolver- Stanzkopf ausgeführt sein. Eine vergleichbare Revolverkopfanordnung ist bekannt aus der EP 2 514 317 B1. Ein derartiger Revolverkopf kann neben Stanzstempeln beispielsweise auch Teigling-Stüpfler aufweisen. Mit der Stanzvorrichtung können je nach Ausführung auch unterschiedliche Donutgrößen, was insbesondere den Durchmesser einer zentralen Donut-Öffnung und/oder das Donutgewicht angeht, erzeugt werden. Hierzu kann die Stanzvorrichtung austauschbare Stanzstempel und/oder austauschbare Teigling-Träger aufweisen. Die Stanzvorrichtung kann einen im Betriebsablauf dem Stanzkopf vorgelagerten Vordrückstempel aufweisen. Ein derartiger Vordrückstempel ist grundsätzlich bekannt aus der EP 1 600 058 B1.

Erfindungsgemäß vermöglicht der Förderantrieb mit dem endlos umlaufenden Zugmittel eine Förderung einer Mehrzahl von Teigling-Trägern mit konstruktiv vergleichsweise geringem Aufwand. Soweit jeweils einer der Teigling-Träger mehrere Teigling-Aufnahmen aufweist, ist der Teigling-Träger quer zur Teigling-Förderrichtung angeordnet, sodass eine mehrreihige Verarbeitung der im jeweiligen Teigling-Träger angeordneten Teiglinge möglich ist. Bei Nutzung eines derartigen Förderantriebs kommen die Vorteile der Stanzvorrichtung mit dem mindestens einen Teigling-Träger besonders gut zur Geltung. Der Teigling-Träger kann zum Ersatz eines Bechers in einem Becherwerk gemäß beispielsweise der DE 10 2013 218 071 A1 oder zum Ersatz eines Trögels einer Stüpfelvorrichtung gemäß beispielsweise der DE 198 47 436 A1 ausgeführt sein. Erfindungsgemäß kommen als Zugmittele ine Kette und/oder ein Riemen zum Einsatz.

Bei einer alternativen Variante der Stanzvorrichtung kann anstelle einer Durchtrittsöffnung in der Teigling-Aufnahme oder den Teigling-Aufnahmen ein mit dem Stanzstempel beim Stanzen zusammenwirkender Gegenkörper in jeder der Teigling-Aufnahmen ausgebildet sein. Ein derartiger Gegenkörper kann insbesondere als flexible Membran gestaltet sein. Bei einer solchen Gegenkörper-Gestaltung der Teigling-Aufnahmen ist der Stanzstempel als Stanz-Hohlkörper ausgeführt, wobei ein ausgestanzter Teigrest zunächst in diesem Hohlkörper aufgenommen ist und anschließend abgeführt wird. Das Abführen des ausgestanzten Teigrests kann über eine Druckluftbeaufschlagung der Membran unterstützt werden.

Eine Zentriereinrichtung nach Anspruch 2 führt zu einer guten Teigring-Qualität. Die Zentriereinrichtung kann durch eine Schrägfläche-Gestaltung eines führenden Stanzendes des Stanzstempels ausgebildet sein, über die sich der Stanzstempel in der zugeordneten Matrizen-Durchtrittsöffnung während des Stanzvorgangs relativ zur zugeordneten Teigling-Aufnahme zentriert. Teil der Zentriereinrichtung kann eine Führungskörper-Anordnung mit Führungskörpern sein, die zusammenwirkend mit einer Förderbewegung der hin zum Stanzkopf geförderten, noch nicht gestanzten Teiglinge eine Zentrierung der Teiglinge in einer Teigling-Anordnungsebene längs mindestens einer Zentrierdimension gewährleistet. Eine derartige Führungskörper-Anordnung kann eine Anzahl von Führungskörpern haben, die der Anzahl der Reihen entspricht, die mit der Stanzvorrichtung erzeugt werden können. Die Führungskörper können als in der Teigling-Förderrichtung sich V-förmig verengende Schrägflächen-Paare gestaltet sein. Die gesamte Führungskörper-Anordnung kann zwischen einer aktiven Führungsstellung, in der eine Zentrierung der Teiglinge durchgeführt wird, und einer inaktiven Führungsstellung, in der die Führungskörper nicht mit den geförderten Teiglingen zusammenwirken, angetrieben verlagerbar sein. Eine Verlagerungsrichtung eines derartigen Verlagerungsantriebs kann insbesondere senkrecht zur Anordnungsebene der Teiglinge verlaufen.

Eine Zentriereinrichtung nach Anspruch 3 ist wenig aufwendig.

Eine Zentrierdorn-Führung nach Anspruch 4 ist betriebssicher. Alternativ oder zusätzlich kann der Zentrierdorn der Zentriereinrichtung an seinem freien Ende mit einem Führungskonus als Einführhilfe in die Zentrierdorn-Führung versehen sein.

Eine Mehrzahl von Zentrierdornen und Zentrierdorn-Führungen nach Anspruch 5 verbessert eine Zentriergenauigkeit der Zentriereinrichtung.

Ein Rüttelantrieb nach Anspruch 6 gewährleistet eine Zentrierung der Teiglinge in den Teigling-Aufnahmen.

Die Vorteile einer Führungskörper-Anordnung nach Anspruch 7 wurden vorstehend bereits erläutert.

Der Teigling-Träger ist mit dem Zugmittel und/oder mit dem Förderantrieb über eine Schnellverriegelung verbindbar. Eine derartige Schnellverriegelung ermöglicht einen schnellen Austausch des mindestens einen Teigling-Trägers. Dies ist insbesondere dann von Vorteil, wenn der Teigling-Träger im Austausch beispielsweise gegen einen Becher oder Trögel in einer Teigbearbeitungsanlage zum Einsatz kommt. Eine entsprechende Schnellverriegelung kann auch bei der Befestigung des jeweiligen Stanzstempels an der Stanzvorrichtung vorgesehen sein, was einen raschen Stanzstempel-Wechsel ermöglicht.

Eine Teigreste-Fördereinrichtung nach Anspruch 8 führt zu einer hygienischen Arbeitsweise der Stanzvorrichtung. Das Förderband kann unterhalb des Stanzkopfes angeordnet sein, sodass nach erfolgtem Stanzen der ausgestanzte Teigrest durch die Durchtrittsöffnung der jeweiligen Teigling-Aufnahme nach unten auf das Förderband fällt. Alternativ oder zusätzlich können die Stanzstempel des Stanzkopfes oder auch ausgewählte Stanzstempel des Stanzkopfes als Stanz-Hohlkörper ausgeführt sein, wobei der ausgestanzte Teigrest dann durch den Hohlkörper mit einer entsprechend ausgeführten Teigrest-Fördereinrichtung abgeführt wird. Die Teigrest-Fördereinrichtung kann eine Absaugvorrichtung zum Absaugen der ausgestanzten Teigreste aufweisen.

Dies gilt besonders für eine Teigreste-Fördereinrichtung nach Anspruch 9.

Ein Hub/Dreh-Stempelantrieb nach Anspruch 10 gewährleistet einen für den Teigling besonders schonenden Stanzvorgang. Eine entsprechende Hub/Dreh-Stanzverlagerung kann beispielsweise mittels einer Schraubenführung des Stanzstempels realisiert sein. Bei der Drehung des Stanzstempels während der Stanzverlagerung kann eine Drehung um einen Drehwinkel im Bereich von 90° und insbesondere um einen Drehwinkel im Bereich zwischen 0° und 180° erfolgen. Auch Drehwinkel im Bereich beispielsweise von 45° oder 60° sind möglich. Alternativ kann der Stanzstempel auch ausschließlich als Hubstempel ausgeführt sein, sodass keine Drehverlagerung des Stanzstempels beim Stanzvorgang erfolgt.

Die Vorteile einer Teigbearbeitungsanlage nach Anspruch 11 entsprechen denen, die vorstehend mit Bezugnahmen auf die Stanzvorrichtung bereits erläutert wurden. Die Stanzvorrichtung kann als eine von mehreren Stationen der Teigbearbeitungsanlage ausgeführt sein, die den jeweiligen Teigling sequenziell bearbeiten.

Mit der Teigbearbeitungsanlage können, je nachdem, ob die Stanzvorrichtung aktiv ist oder nicht, Teigringe, runde Teiglinge ohne Loch, und wahlweise auch gestüpfelte Brötchen, gedrückte Brötchen und Schnittbrötchen erzeugt werden.

Ein Ausführungsbeispiel der Erfindung wird nachfolgend anhand der Zeichnungen näher erläutert. In dieser zeigen:
- Fig. 1: in einer Seitenansicht einen Ausschnitt einer Teigbearbeitungsanlage mit einer Stanzvorrichtung zur Erzeugung mehrerer Reihen von schlusslosen Teigringen, insbesondere von Donuts;
- Fig. 2: im Vergleich zu Figur 1 vergrößert und wiederum in einer Seitenansicht Hauptkomponenten der Stanzvorrichtung;
- Fig. 3: eine perspektivische Ansicht der Stanzvorrichtungs-Hauptkomponenten nach Fig. 2;
- Fig. 4: eine Aufsicht auf einen Teigling-Träger der Stanzvorrichtung, der auch als Donut-Schale bezeichnet wird;
- Fig. 5: eine perspektivische Ansicht des Teigling-Trägers nach Fig. 4;
- Fig. 6: eine teilweise Explosionsdarstellung der Hauptkomponenten der Stanzvorrichtung 2, gesehen aus Blickrichtung VI in Fig. 2;
- Fig. 7: perspektivisch eine weitere Ausführung einer Stanzvorrichtung, die alternativ bei der Teigbearbeitungsanlage zum Einsatz kommen kann und die über eine Variante einer Teigling-Zentriereinrichtung verfügt;
- Fig. 8: perspektivisch und im Vergleich zu Fig, 7 vergrößert einen Stanzstempel der Stanzvorrichtung nach Fig. 7; und
- Fig. 9: ebenfalls perspektivisch, vergrößert und aus anderer Blickrichtung eine Führungskörper-Anordnung als Teil der Zentriereinrichtung der Stanzvorrichtung nach Fig. 7.

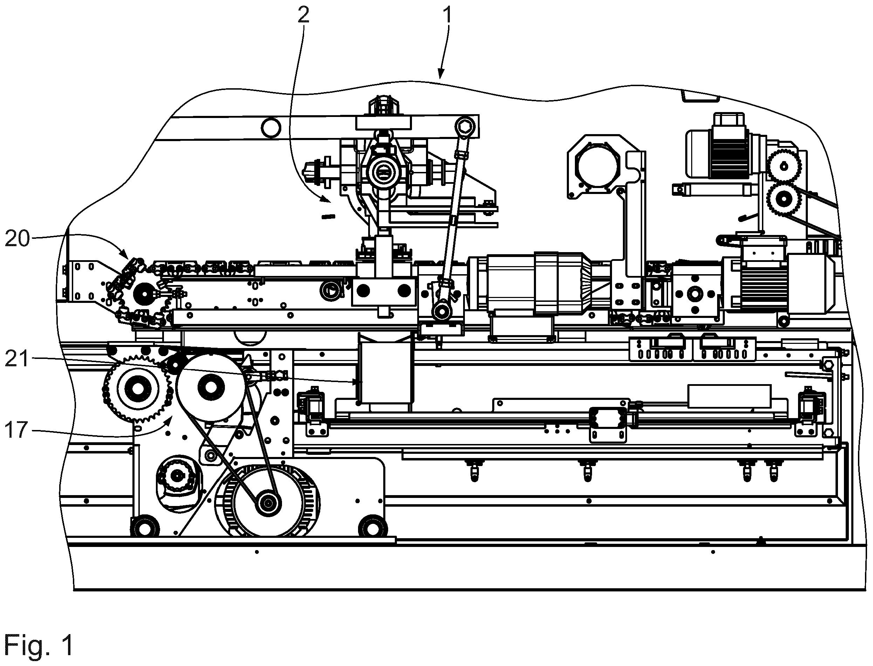

Eine in der Figur 1 ausschnittsweise Teigbearbeitungsanlage 1 hat mehrere Bearbeitungsstationen für Teiglinge, zu denen eine Stanzvorrichtung 2 zur Erzeugung mehrerer Reihen von schlusslosen Teigringen gehört.

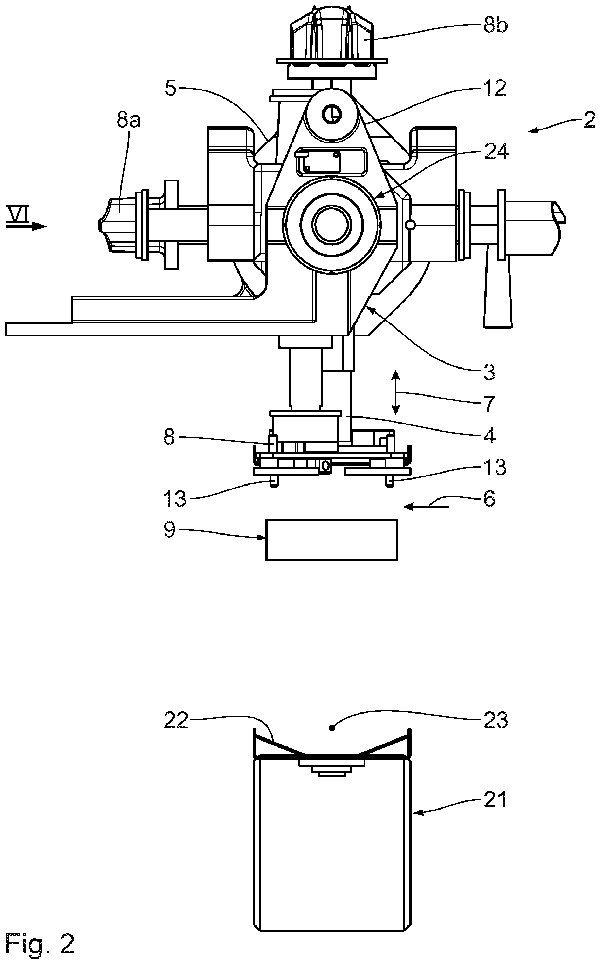

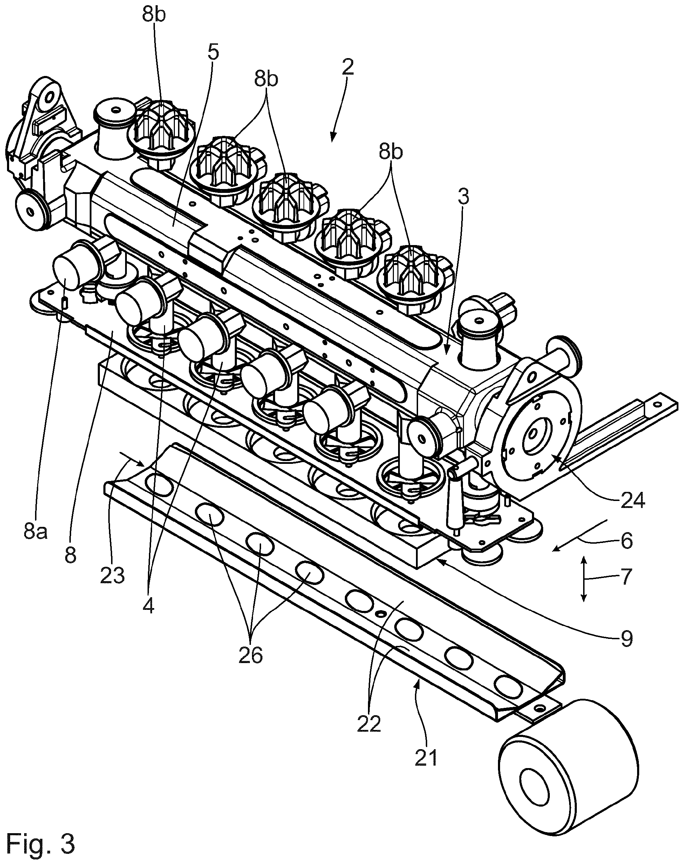

Hauptkomponenten der Stanzvorrichtung sind stärker im Detail in den Figuren 2 und 3 dargestellt.

Die Stanzvorrichtung 2 hat einen Stanzkopf 3 mit einer Mehrzahl von Stanzstempeln 4, wobei jeder der Stanzstempel 4 einer Teigling /Teigring-Reihe zugeordnet ist. Insgesamt hat der Stanzkopf 3 fünf nebeneinander angeordnete Stanzstempel 4 entsprechend einem fünf-reihigen Aufbau der Teigbearbeitungsanlage 1. Die Stanzstempel 4 sind von einem Trägerbalken 5 des Stanzkopfes 3 gehalten, der sich quer zu einer Teigling-Förderrichtung 6 der Teigbearbeitungsanlage 1 erstreckt. Eine Stanz-Hubverlagerung der Stanzstempel 4 in einer Hubrichtung 7 (vgl. Doppelpfeile in den Figuren 2 und 3) ist geführt über eine Führungsplatte 8, in der jeweils Führungs-Durchtrittsöffnungen für die Stanzstempel 4 ausgeführt sind.

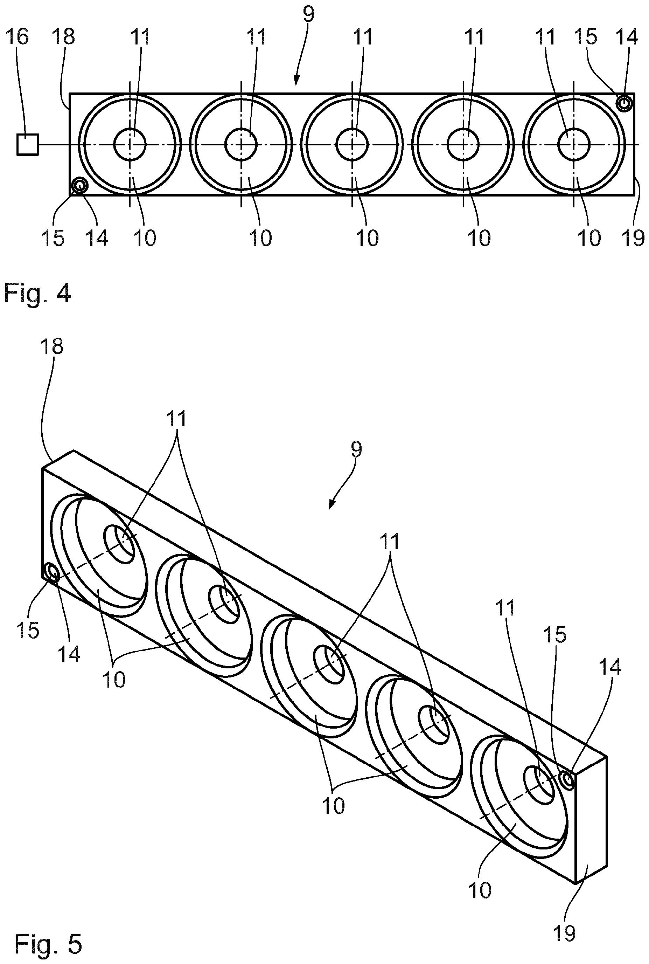

Zur Stanzvorrichtung 2 gehört weiterhin ein Teigling-Träger 9, der in den Figuren 4 und 5 näher dargestellt ist. Der Teigling-Träger 9 hat eine Mehrzahl von Teigling-Aufnahmen 10 und bei der dargestellten Ausführung der Teigling-Träger 9 insgesamt fünf Teigling-Aufnahmen 10. Jede der Teigling-Aufnahmen 10 des Teigling-Trägers 9 ist einem der Stanzstempel 4 zugeordnet. In jeder der Teigling-Aufnahmen 10 ist als Matrize der Stanzvorrichtung 2 eine Durchtrittsöffnung 11 für den zugeordneten Stanzstempel 4 ausgeführt. In der Betriebsposition verlaufen die fünf nebeneinander angeordneten Teigling-Aufnahmen 10 quer zur Teigling-Förderrichtung 6.

Der Stanzkopf 3 ist als Revolver-Stanzkopf ausgeführt und hat neben den Stanzstempeln 4 noch mehrere Reihen verschiedener Teigling-Stüpfler 8a, 8b. Eine Auswahl des jeweils mit den Teiglingen zusammenwirkenden Werkzeugs kann durch Drehung des Revolverkopfes um eine längs den Trägerbalken 5 verlaufende Schwenkachse 12 erfolgen. Details zu einem derartigen Revolverkopf sind beschrieben in der EP 2 514 317 B1.

Die Stanzvorrichtung 2 hat eine Zentriereinrichtung zum Zentrieren der jeweiligen Durchtrittsöffnung 11 des Teigling-Trägers 9 relativ zu den Stanzstempeln 4 sowie zum Zentrieren des jeweiligen Teiglings relativ zur Teigling-Aufnahme 10.

Die Zentriereinrichtung hat mehrere Zentrierdorne 13 (vgl. Fig. 2) die fest mit den Stanzstempeln derart verbunden sind, dass sie sich bei einer Stanz-Hubverlagerung der Stanzstempel 4 mit diesen in der Hubrichtung 7 verlagernd. Weiterhin hat die Zentriereinrichtung mehrere jeweils mit einem der Zentrierdornen 13 zusammenwirkende Zentrierdorn-Führungen 14, die als Zentrierbohrungen im Teigling-Träger 9 an zueinander beanstandeten Positionen angebracht sind. Die Zentrierbohrungen 14 haben jeweils eine umlaufende Fase als Einführhilfe 15 für den zugeordneten Zentrierdorn 13. Alternativ oder zusätzlich kann der jeweilige Zentrierdorn 13 einen Führungskonus als Einführhilfe in die zugeordnete Zentrierdorn-Führung 14 aufweisen.

Die Zentriereinrichtung kann weiterhin einen in der Figur 4 schematisch angedeuteten Rüttelantrieb 16 für den Teigling-Träger 9 aufweisen.

Ein Förderantrieb 17 der Teigbearbeitungsanlage 1 dient zum Fördern des Teigling-Trägers 9 in der Teigling-Förderrichtung 6. Der Teigling-Träger 9 ist dabei quer zur Teigling-Förderrichtung 6 angeordnet und über seine beiden Stirnseiten 18, 19 (vgl. Fig. 4) mit mindestens einem endlos umlaufenden Zugmittel 20 verbunden. Bei dem Zugmittel 20 kann es sich um mindestens eine Kette oder um mindestens einen Riemen handeln. Bei der dargestellten Ausführung ist der Teigling-Träger 9 zum Ersatz eines Bechers in einem Becherwerk ausgeführt entsprechend einem Becherwerk, welches beschrieben ist in der DE 10 2013 218 071 A1. Alternativ kann der Teigling-Träger 9 auch zum Ersatz eines Trögels in einer Stüpfelvorrichtung ausgeführt sein, die beschrieben ist in der DE 198 47 436 A1. Der Teigling-Träger 9 ist über eine in der Zeichnung nicht näher dargestellte Schnellverriegelung mit dem Zugmittel 20 des Förderantriebs 17 verbindbar.

Zum Abtransport der beim Stanzen mit der Stanzvorrichtung 2 ausgestanzten Teigreste dient einen weitere Fördereinrichtung 21 der Stanzvorrichtung 2. Letztere weist ein Förderband 22 mit Teigrest-Förderrichtung 23 auf, die quer zur Teigling-Förderrichtung 6 verläuft.

Ein Stempelantrieb 24 dient zur Stanzverlagerung der Stanzstempel 4. Diese Stanzverlagerung ist derart, dass einer Stanz-Hubverlagerung der Stanzstempel 4 in der Hubrichtung 7 eine Drehung des jeweiligen Stanzstempels 4 um eine längs einer Stempelachse 25 verlaufende Drehachse überlagert ist. Diese Hub/Dreh-Stanzverlagerung der Stanzstempel 4 kann über eine entsprechende Schraubenführung in der Führungsplatte 8 gewährleistet sein. Eine Drehung der Stanzstempel 4 um die Drehachse 25 während der Stanzverlagerung kann beispielsweise im Bereich von 90° sein oder kann auch kleiner sein als 90°. Je nach Ausführung der Stanzvorrichtung 2 kann der Drehwinkel der Stanzstempel 4 um die Drehachse 25 zwischen 0° und 180° liegen und kann, je nach Ausführung der Stanzvorrichtung 2, auch im Bereich von 45° oder im Bereich von 60° liegen. Auch eine reine Hubverlagerung der Stanzstempel 4 beim Stanzen, also ohne Drehbewegung, ist möglich.

Zur Erzeugung mehrerer Reihen von schlusslosen Teigringen arbeitet die Teigbearbeitungsanlage 1 mit der Stanzvorrichtung 2 wie folgt:
Zur Vorbereitung der Teigringerzeugung wird die Teigbearbeitungsanlage 1 mit Teigling-Trägern 9 bestückt, die beispielsweise anstelle von Bechern in einem Becherwerk entsprechend der DE 10 2013 218 071 A1 eingesetzt werden. Hierzu werden Schnellverriegelungen der Becher gelöst, die Becher aus dem Becherwerk entnommen und durch die Teigling-Träger 9 ersetzt. Soweit mit der Teigbearbeitungsanlage 1 ausschließlich Teigringe, beispielsweise Donuts, und runde Teiglinge hergestellt werden, ist es nicht erforderlich, die Teigbearbeitungsanlage 1 mit Bechern zu betreiben und ein derartiger Tauschvorgang ist nicht erforderlich. Anschließend wird die Teigbearbeitungsanlage 1 aktiviert und es werden in Förrderrichtung vor dem Stanzkopf 3 Teiglinge in die Teigling-Aufnahmen 10 der Teigling-Träger 9 gegeben. Zum Zentrieren der noch ungestanzten Teiglinge in den Teigling-Aufnahmen 10 werden die Teigling-Träger 9 mittels des Rüttelanstriebs 16 gerüttelt, bis die Teiglinge mittig in den Teigling-Aufnahmen 10 zum Liegen kommen. Die Teigling-Träger 9 werden dem Stanzkopf 3 in der Förderrichtung 6 taktweise zugeführt. Anschließend erfolgt eine Zentrierung des jeweils zum Stanzen der Teiglinge den Stanzkopf 3 zugeordneten, also direkt unter diesem angeordneten Teigling-Trägers. Hierzu rücken die Zentrierdorne 13 zu Beginn der Stanzverlagerung der Stanzstempel 4 in die Zentrierdorn-Führungen 14 des zugeordneten Teigling-Trägers 9 ein. Sobald die Zentrierdorne 13 in die Zentrierdorn-Führungen 14 eingerückt sind, ist der Teigling-Träger 9 insgesamt in Bezug auf die Stanzstempel 4 zentriert, sodass einerseits die jeweiligen Durchtrittsöffnungen 11 des Teigling-Trägers 9 relativ zu den Stanzstempeln 4 zentriert sind und andererseits die jeweiligen Teiglinge relativ zu den Teigling-Aufnahmen 10 zentriert sind. Automatisch ergibt sich somit eine Zentrierung der Stanzstempel 4 relativ zu den zu stanzenden Teiglingen, sodass beim nun folgenden Stanzschritt die Teiglinge mittig zu Teigringen gestanzt werden. Dem eigentlichen Stanzschritt kann noch ein Vordrückschritt vorgelagert sein, bei dem die Teiglinge vorgedrückt werden, damit Teigmaterial aus dem Bereich des späteren Stanzlochs nach außen verdrängt wird. Dies führt zu einer Verringerung einer ausgestanzten Teigmenge, wie dies grundsätzlich bereits bekannt ist aus der EP 1 600 058 B1.

Alternativ oder zusätzlich zu einer derartigen, zentralen Vordrückeinheit kann der Teigling vor dem Stanzschritt in der jeweiligen Teigling-Aufnahme mittels eines vorgelagerten Flachdrückwerkzeuges gleichmäßig verteilt werden. Weder das Vordrückwerkzeug noch das Flachdrückwerkzeug sind in der Zeichnung dargestellt.

Die Teigreste (vgl. Teigreste 26 in der Fig. 3) fallen durch die Durchtrittsöffnungen 11 nach unten, wobei bei der Bestückung des Becherwerks mit den Teigling-Trägern 9 darauf geachtet wird, dass unter dem jeweils beim Stanzen aktiven Teigling-Träger 9 kein weiterer Teigling-Träger oder Becher angeordnet ist, sodass die Teigreste 26 frei auf das Förderband 22 der Teigrest-Fördereinrichtung 21 fallen können. Die Teigreste 26 werden sodann in der Teigrest-Förderrichtung 23 abgefördert und können einer Wiederverwertung zugeführt werden. Alternativ oder zusätzlich zur Abführung der Teigreste über das Förderband 22 können die Stanzstempel 4 als Hohlkörper mit Schneide ausgeführt sein, wobei dann die ausgestanzten Teigreste über diese Hohlkörper mit Hilfe einer Absaugvorrichtung abgeführt werden und beispielsweise einem Sammelbehälter zugeführt werden. Als Absaugvorrichtung kann eine Vakuumpumpe zum Einsatz kommen, die beispielsweise bei Industriestaubsaugern Verwendung findet. Zum Unterstützen des Abführens des jeweiligen ausgestanzten Teigrests kann die jeweilige Teigling-Aufnahme 10 mit einer zentralen Membran ausgeführt sein, die ebenfalls mit Druckluft beaufschlagt wird.

Beim Stanzen findet mit Hilfe der Stanzstempelführung über die Führungsplatten 8 eine kombinierte Hub-Drehbewegung der Stanzstempel 4 statt, was das Stanzen der Teiglinge erleichtert. Die gestanzten Teigringe werden dann einer weiteren Verarbeitung in der Teigbearbeitungsanlage 1 zugeführt. Diese weitere Verarbeitung kann einen Gärprozess beinhalten. Nach einem solchen Gärprozess kann im Rahmen der Teigbearbeitung der Teigring mitttels einer Druckrolle und/oder mittels eines Druck- oder Oberbandes noch flachgedrückt werden. Entsprechende Druckeinheiten sind in der Zeichnung nicht dargestellt.

Der Stempelantrieb kann mindestens einen Servoantrieb und/oder einen Getriebemotor beinhalten.

Anstelle einer Querförderung der Teigreste kann grundsätzlich auch eine Längsförderung in der Teigling-Förderrichtung 6 erfolgen.

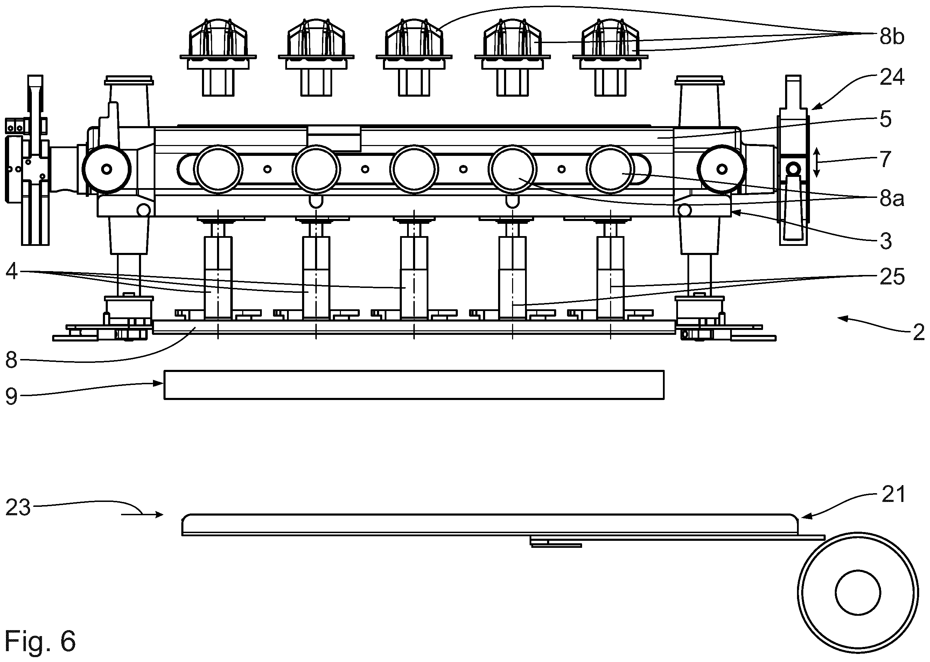

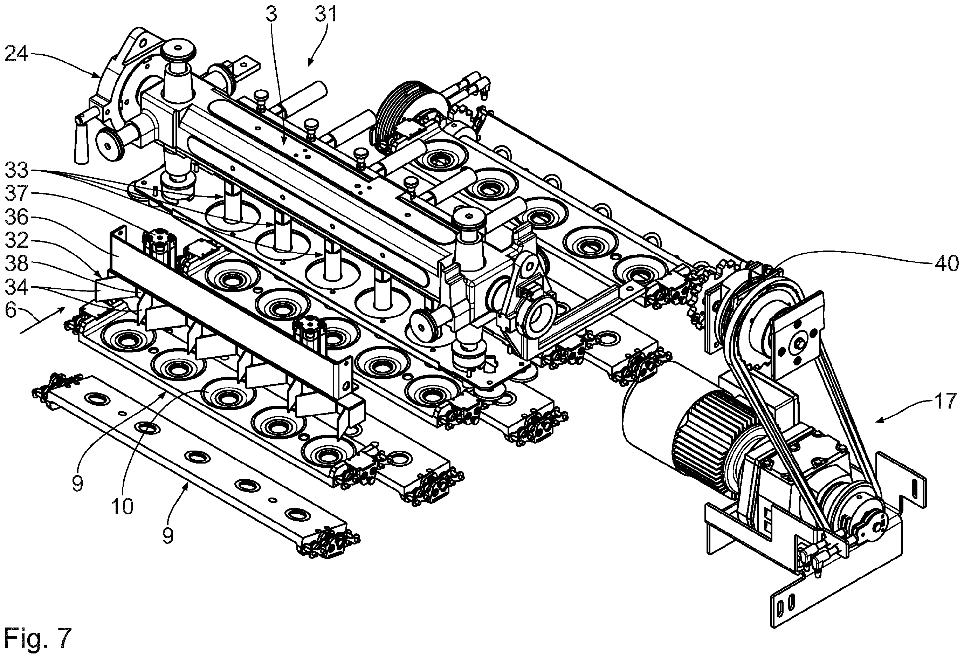

Anhand der Figur 7 bis 9 wird nachfolgend eine weitere Ausführung einer Stanzvorrichtung 31 beschrieben, die anstelle der Stanzvorrichtung 2 bei der Teigbearbeitungsanlage 1 zum Einsatz kommen kann. Komponenten und Funktionen, die denjenigen entsprechen, die vorstehend unter Bezugnahme auf die Figuren 1 bis 6 bereits erläutert wurden, tragen die gleichen Bezugszeichen und werden nicht nochmals im Einzelnen diskutiert.

In der Figur 7 ist das Zugmittel 20 weggelassen, wobei eine Anordnung der aufgrund der Förderung mit dem Zugmittel 20 umlaufenden Teigling-Träger 9 zur Veranschaulichung beibehalten ist. Dargestellt sind insgesamt neun umlaufende Teigling-Träger 9, von denen vier der Teigling-Träger 9 so orientiert sind, dass ihre Teigling-Aufnahmen 10 zur Aufnahme von Teiglingen nach oben orientiert sind. Diese vier Teigling-Träger 9, die Momentaufnahmen der Förderung der Teigringe in der Förderrichtung 6 vor und nach dem Stanzvorgang zeigen, geben eine Teigling-Anordnungsebene vor.

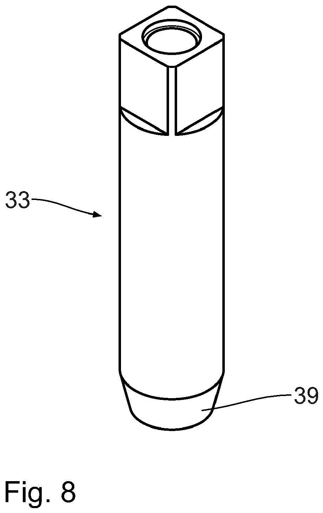

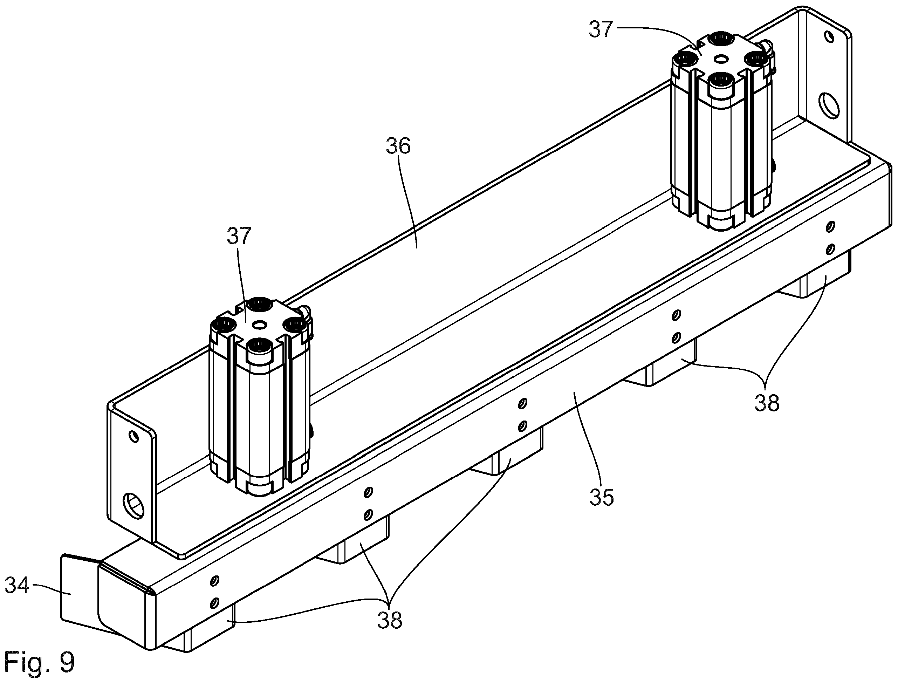

Eine Zentriereinrichtung ist bei der Ausführung nach den Figuren 7 bis 9 ausgebildet einerseits über eine Führungskörper-Anordnung 32 zur Zentrierung der Teiglinge mindestens in einer Zentrierdimension quer zur Förderrichtung 6 und andererseits über eine Zentrier-Variante von Stanzstempeln 33. Diese Zentrierkomponenten, die auch unabhängig voneinander zum Einsatz kommen können, werden nachfolgend unter zusätzlicher Bezugnahme auf die Figuren 8 und 9 erläutert.

Die Führungskörper-Anordnung 32 ist im Förderweg der Teigling-Träger 9 vor dem Stanzkopf 3 angerordnet. Die Führungskörper-Anordnung 32 hat eine der Anzahl der zu erzeugenden Teigring-Reihen entsprechende Anzahl, bei der in der Figur 7 dargestellten Ausführung also fünf Paare von Schrägflächen 34, die als Führungsflächen für die geförderten Teiglinge ausgeführt sind. Die Schrägflächen 34 sind in Bezug auf die Teigling-Anordnungsebene vertikal angeordnet. Die Schrägflächen 34 eines jeweiligen Schrägflächen-Paars sind in der Teigling-Förderrichtung 6 V-förmig aufeinander zulaufend ausgeführt. Die Schrägflächen-Paare werden von einem gemeinsamen Tragkörper 35 (vgl. Fig. 9) getragen, der relativ zu einer rahmenfesten Rahmenkomponente 36 vertikal, also senkrecht zur Teigling-Anordnungsebene verlagerbar ist. Diese Verlagerungsbewegung des Tragkörpers 35 ist angetrieben über zwei Servomotoren 37, die von der Rahmenkomponente 36 getragen werden. Das Absenken der Schrägflächen-Paare mithilfe der Servomotoren 37 ist synchronisiert und getaktet zur Förderbewegung der Teigling-Träger 9, also synchronisiert mit dem Förderantrieb 17.

Mithilfe dieses Vertikalantriebs 37 können die Paare der Schrägflächen 34 verlagert werden zwischen einer angehobenen, hinsichtlich einer Zentrierfunktion inaktiven Stellung und einer abgesenkten Stellung, in der in die Schrägflächen-Paare einlaufende Teigling quer zur Teigling-Förderrichtung 6 zentriert werden.

Die Schrägflächen-Paare können zudem so ausgeführt sein, dass zwischen dem jeweiligen Schrägflächen 34 eine sich ebenfalls vertikal und senkrecht zur Teigling-Förderrichtung verlaufende Anschlagfläche 38 erstreckt, die in der perspektivischen Darstellung nach Fig. 9 von hinten zu sehen ist. Durch Anschlag der jeweils zu zentrierenden Teiglinge an den Anschlagflächen 38 in der abgesenkten Zentrierstellung der Schrägflächen-Paare erfolgt auch eine Zentrierung der Teiglinge in der Dimension parallel zur Teigling-Förderrichtung 6.

Anstelle schräg zulaufender Schrägflächen 34 kann die Führungskörper-Anordnung 32 auch mit insgesamt abgerundet geformten Schrägflächen ausgeführt sein, die dann sowohl die Funktion der Schrägflächen als auch die Funktion der Anschlagfläche der vorstehend beschriebenen Ausführung übernehmen können.

Eine Zentrierung der Teigling-Träger 9 relativ zu den Stanzstempeln 33 (vgl. auch Fig. 8) erfolgt alternativ oder zusätzlich mithilfe eines sich konisch verjüngenden freien Stempel-Endabschnitts 39. Beim Stanzvorgang mit dem Stanzstempel 33 dringt zunächst das verjüngte Ende des Stempel-Endabschnitts 39 in die Durchtrittsöffnung 11 der jeweiligen Teigling-Aufnahme 10 des Teigling-Trägers 9 ein. Die sich konisch verjüngende Form des Stempel-Endabschnitts 39 gewährleistet, dass Positionstoleranzen zwischen den Zentren der Durchtrittsöffnungen 11 einerseits und den Mittelachsen der zugehörigen Stanzstempel 33 andererseits durch eine beim Eindringen der Stempel-Endabschnitte 39 in die Durchtrittsöffnungen 11 erfolgende Anpassungsverlagerung der Teigling-Träger in der Teigling-Anordnungsebene ausgeglichen werden. Dies stellt sicher, dass die Stanzstempel den Stanzvorgang zentriert in den Teigling-Aufnahmen 10 durchführen.

Während des jeweiligen Zentriervorgangs kann eine Trennung der angetriebenen Teigling-Träger 9 vom Förderantrieb 17 über eine Kupplung (vgl. Fig. 7) erfolgen, die zwischen dem Antriebsmotor des Förderantriebs 17 und dem Zugmittel 20 angeordnet ist.

Alternativ zu einer insgesamt konischen Ausführung des Stempel-Endabschnitts 39 kann dieser, falls eine Zentrierfunktion des Stanzstempels 33 lediglich in einem Zentrierfreiheitsgrad erforderlich ist, auch über eine oder gegebenenfalls mehrere Schrägflächen am freien Ende des Stanzstempels 33 realisiert werden. Verschiedene der Stanzstempel 33 der gleichzeitig arbeitenden Stempelreihe des Stanzkopfs 3 der Stanzvorrichtung 31 können zur Zentrierung mehrerer Zentrier-Freiheitsgrade verschieden orientierte Schrägflächen aufweisen.

Bei einer nicht dargestellten Ausführung kann die Stanzvorrichtung zur Erzeugung genau einer Reihe von schlusslosen Teigringen ausgebildet sein. In diesem Fall hat die Stanzvorrichtung einen Stanzstempel, der dieser Teigling-Reihe zugeordnet ist und einen Teigling-Träger mit einer Teigling-Aufnahme, die wiederum dem Stanzstempel zugeordnet ist.

## Patentansprüche

1. Stanzvorrichtung (2; 31) zur Erzeugung einer oder mehrerer Reihen von schlusslosen Teigringen,
- mit einem Stanzkopf (3) mit einem Stanzstempel (4) oder einer Mehrzahl von Stanzstempeln (4), wobei jeder Stanzstempel (4) einer Teigring-Reihe zugeordnet ist,
- mit einem Teigling-Träger (9) mit einer Teigling-Aufnahme (10) oder einer Mehrzahl von Teigling-Aufnahmen (10), wobei jede der Teigling-Aufnahmen (10) des Teigling-Trägers (9) einem der Stanzstempel (4) zugeordnet ist, wobei in der Teigling-Aufnahme (10) oder in jeder der Teigling-Aufnahmen (10) als Matrize eine Durchtrittsöffnung (11) für den zugeordneten Stanzstempel (4) ausgeführt ist,
- und mit einem Förderantrieb (17) zum Fördern des Teigling-Trägers (9) in einer Teigling-Förderrichtung (6), wobei der Teigling-Träger (9) mit einem endlos umlaufenden Zugmittel (20) verbunden ist, **dadurch gekennzeichnet, dass** das endlos umlaufende Zugmittel (20) ein Teil des Förderantriebes (17) bildet, wobei als Zugmittel eine Kette oder ein Riemen zum Einsatz kommt.

2. Stanzvorrichtung nach Anspruch 1, **gekennzeichnet durch** eine Zentriereinrichtung (13, 14, 16) zum Zentrieren der jeweiligen Durchtrittsöffnungen (11) des Teigling-Trägers (9) relativ zu den Stanzstempeln (4) und/oder zum Zentrieren des jeweiligen Teiglings relativ zur Teigling-Aufnahme (10).

3. Stanzvorrichtung nach Anspruch 2, **dadurch gekennzeichnet, dass** die Zentriereinrichtung mindestens einen Zentrierdorn (13), der am Stanzkopf (3) oder am Teigling-Träger (9) angebracht ist, und mindestens eine mit dem Zentrierdorn (13) zum Zentrieren zusammenwirkende Zentrierdornführung (14), die am Teigling-Träger (9) oder am Stanzkopf (3) ausgeführt ist, aufweist.

4. Stanzvorrichtung nach Anspruch 3, **dadurch gekennzeichnet, dass** die Zentrierdorn-Führung (14) als Zentrierbohrung ausgeführt ist, die eine umlaufende Fase (15) als Einführhilfe für den Zentrierdorn (13) aufweist.

5. Stanzvorrichtung nach einem der Ansprüche 3 oder 4, **dadurch gekennzeichnet, dass** die Zentriereinrichtung mehrere Zentrierdorne (13) und mehrere hiermit zum Zentrieren zusammenwirkende Zentrierdorn-Führungen (14) aufweist.

6. Stanzvorrichtung nach einem der Ansprüche 2 bis 5, **dadurch gekennzeichnet, dass** die Zentriereinrichtung einen Rüttelantrieb (16) für den Teigling-Träger (9) aufweist.

7. Stanzvorrichtung nach einem der Ansprüche 2 bis 6, **dadurch gekennzeichnet, dass** die Zentriereinrichtung eine Führungskörper-Anordnung (32) aufweist, die mit dem Förderantrieb (17) zum Zentrieren der Teigringe in mindestens einer Zentrierdimension zusammenwirkt.

8. Stanzvorrichtung nach einem der Ansprüche 1 bis 7, **gekennzeichnet durch** eine Fördereinrichtung (21) zum Abtransport ausgestanzter Teigreste.

9. Stanzvorrichtung nach Anspruch 8, **dadurch gekennzeichnet, dass** die Fördereinrichtung (21) ein Förderband (22) mit einer Teigrest-Förderrichtung (23) aufweist, die quer zur Teigling-Förderrichtung (6) verläuft.

10. Stanzvorrichtung nach einem der Ansprüche 1 bis 9, **gekennzeichnet durch** einen Stempelantrieb (24) zur Stanzverlagerung der Stanzstempel (4) derart, dass einer Stanz-Hubverlagerung des jeweiligen Stanzstempels (4) in einer Hubrichtung (7) parallel zu einer Stempelachse (25) eine Drehung des Stanzstempels (4) um eine längs der Stempelachse (25) verlaufende Drehachse überlagert ist.

11. Teigbearbeitungsanlage (1) mit einer Stanzvorrichtung (2; 31) nach einem der Ansprüche 1 bis 10.

## Claims

1. A punching device (2; 31) for producing one or more rows of seamless dough rings,
- with a punching head (3) with one punch (4) or a plurality of punches (4), wherein each punch (4) is associated with a dough ring row,
- with a dough piece carrier (9) with a dough piece receptacle (10) or a plurality of dough piece receptacles (10), wherein each of the dough piece receptacles (10) of the dough piece carrier (9) is associated with one of the punches (4), wherein in the dough piece receptacle (10) or in each of the dough piece receptacles (10) a passage opening (11) for the associated punch (4) is configured as a matrix, and
- with a conveyor drive (17) for conveying the dough piece carrier (9) in a dough piece conveying direction (6), wherein the dough piece carrier (9) is connected with an endlessly circulating traction means (20),
**characterized in that** the endlessly circulating traction means (20) forms a part of the conveyor drive (17), wherein a chain or belt is used as the traction means.

2. A punching device according to claim **1, characterized by** a centering device (13, 14, 16) for centering the respective passage openings (11) of the dough piece carrier (9) relative to the punches (4) and/or for centering the respective dough piece relative to the dough piece receptacle (10).

3. A punching device according to claim 2, **characterized in that** the centering device has at least one centering mandrel (13), which is attached to the punching head (3) or to the dough piece carrier (9), and at least one centering mandrel guide (14), which interacts with the centering mandrel (13) for centering and is configured on the dough piece carrier (9) or on the punching head (3).

4. A punching device according to claim 3, **characterized in that** the centering mandrel guide (14) is designed as a centering bore which has a circumferential chamfer (15) as an insertion aid for the centering mandrel (13).

5. A punching device according to any one of claims 3 or 4, **characterized in that** the centering device has a plurality of centering mandrels (13) and a plurality of centering mandrel guides (14) interacting therewith for centering.

6. A punching device according to any one of claims 2 to 5, **characterized in that** the centering device has a vibrating drive (16) for the dough piece carrier (9).

7. A punching device according to any one of claims 2 to 6, **characterized in that** the centering device has a guide body arrangement (32) which interacts with the conveyor drive (17) for centering the dough rings in at least one centering dimension.

8. A punching device according to any one of claims 1 to 7, **characterized by** a conveyor device (21) for removing punched-out dough remnants.

9. A punching device according to claim 8, **characterized in that** the conveyor device (21) has a conveyor belt (22) with a dough remnant conveying direction (23) which runs transversely to the dough piece conveying direction (6).

10. A punching device according to any one of claims 1 to 9, **characterized by** a punch drive (24) for punching displacement of the punches (4) in such a way that a punching stroke displacement of the respective punch (4) in a stroke direction (7) parallel to a punch axis (25) is superimposed by a rotation of the punch (4) about an axis of rotation running along the punch axis (25).

11. A dough processing installation (1) with a punching device (2; 31) according to any one of claims 1 to 10.

## Revendications

1. Un dispositif de poinçonnage (2 ; 31) pour produire une ou plusieurs rangées d'anneaux de pâte sans soudure,
- avec une tête de poinçonnage (3) avec un poinçon (4) ou une pluralité de poinçons (4), chaque poinçon (4) étant associé à une rangée d'anneaux de pâte,
- avec un support de pâtons (9) avec un réceptacle de pâtons (10) ou une pluralité de réceptacles de pâtons (10), chacun des réceptacles de pâtons (10) du support de pâtons (9) étant associé à l'un des poinçons (4), une ouverture de passage (11) pour le poinçon (4) associé étant réalisée dans le réceptacle de pâtons (10) ou dans chacun des réceptacles de pâtons (10) en tant que matrice, et
- avec un entraînement de transport (17) pour transporter le support de pâtons (9) dans une direction de transport de pâtons (6), le support de pâtons (9) étant relié à un moyen de traction (20) à circulation sans fin,
**caractérisé en ce que** le moyen de traction à circulation sans fin (20) fait partie de l'entraînement de transport (17), une chaîne ou une courroie étant utilisée comme moyen de traction.

2. Un dispositif de poinçonnage selon la revendication 1, **caractérisé par** un dispositif de centrage (13, 14, 16) pour centrer les ouvertures de passage (11) respectives du support de pâtons (9) par rapport aux poinçons (4) et/ou pour centrer le pâton respectif par rapport au réceptacle de pâtons (10).

3. Un dispositif de poinçonnage selon la revendication 2, **caractérisé en ce que** le dispositif de centrage présente au moins un mandrin de centrage (13), qui est attaché sur la tête de poinçonnage (3) ou sur le support de pâtons (9), et au moins un guide de mandrin de centrage (14), qui coopère avec le mandrin de centrage (13) pour le centrage et qui est réalisé sur le support de pâtons (9) ou sur la tête de poinçonnage (3).

4. Un dispositif de poinçonnage selon la revendication 3, **caractérisé en ce que** le guide du mandrin de centrage (14) est conçu comme un alésage de centrage qui présente un chanfrein périphérique (15) comme aide à l'insertion du mandrin de centrage (13).

5. Un dispositif de poinçonnage selon l'une quelconque des revendications 3 ou 4, **caractérisé en ce que** le dispositif de centrage présente une pluralité de mandrins de centrage (13) et une pluralité de guides de mandrins de centrage (14) coopérant avec ceux-ci pour le centrage.

6. Un dispositif de poinçonnage selon l'une quelconque des revendications 2 à 5, **caractérisé en ce que** le dispositif de centrage présente un entraînement vibrant (16) pour le support de pâtons (9).

7. Un dispositif de poinçonnage selon l'une quelconque des revendications 2 à 6, **caractérisé en ce que** le dispositif de centrage comprend un agencement de corps de guidage (32) coopérant avec l'entraînement de transport (17) pour centrer les anneaux de pâte dans au moins une dimension de centrage.

8. Un dispositif de poinçonnage selon l'une quelconque des revendications 1 à 7, **caractérisé par** un dispositif de transport (21) pour l'évacuation des résidus de pâte poinçonnés.

9. Un dispositif de poinçonnage selon la revendication 8, **caractérisé en ce que** le dispositif de transport (21) présente une bande transporteuse (22) avec une direction de transport de résidus de pâte (23) s'étendant transversalement à la direction de transport de pâtons (6).

10. Dispositif de poinçonnage selon l'une quelconque des revendications 1 à 9, **caractérisé par** un entraînement de poinçon (24) pour le déplacement de poinçonnage du poinçon (4) de telle sorte qu'un déplacement de levée de poinçonnage du poinçon respectif (4) dans une direction de levée (7) parallèle à un axe de poinçon (25) est superposé par une rotation du poinçon (4) autour d'un axe de rotation s'étendant le long de l'axe de poinçon (25).

11. Une installation de traitement de pâte (1) comprenant un dispositif de poinçonnage (2 ; 31) selon l'une quelconque des revendications 1 à 10.
